# DEMANDE DE BREVET EUROPEEN

(11) **EP 1 450 108 A1**
(43) Date de publication de la demande: **25.08.2004**
(21) Numéro de dépôt: 04354005.3
(22) Date de dépôt: 24.02.2004
(51) Int. Cl.: F24D 11/00

(54) **Installation combinée de chauffage solaire et de production d'eau chaude sanitaire**

(30) Priorité: 24.02.2003 FR 0302225
(71) Demandeur: Clipsol, 73100 Aix-Les-Bains (FR)
(72) Inventeur: Papillon, Philippe, 73000 Chambéry (FR); Jean, André, 73100 Trèvignin (FR)
(74) Mandataire: Jouvray, Marie-Andrée

(57) **Abrégé**

L'installation combinée comporte un récipient (1) de stockage d'un fluide de stockage communiquant avec au moins un capteur solaire (2), des moyens auxiliaires (5) de chauffage du fluide de stockage, un plancher chauffant (6) et au circuit primaire d'un échangeur de chaleur (10) ayant un circuit secondaire dans lequel circule de l'eau sanitaire à chauffer. Une telle installation est quasiment monofluide, le fluide de stockage circulant dans tous les composants de l'installation, à l'exception du circuit secondaire de l'échangeur de chaleur 10, dans lequel circule l'eau sanitaire.

## Description

### Domaine technique de l'invention

L'invention concerne une installation combinée de chauffage solaire et de production d'eau chaude sanitaire, comportant au moins un capteur solaire, un récipient de stockage d'un fluide de stockage, communiquant avec des moyens auxiliaires de chauffage du fluide de stockage, avec un plancher chauffant et avec le circuit primaire d'un échangeur de chaleur ayant un circuit secondaire dans lequel circule de l'eau sanitaire à chauffer.

### État de la technique

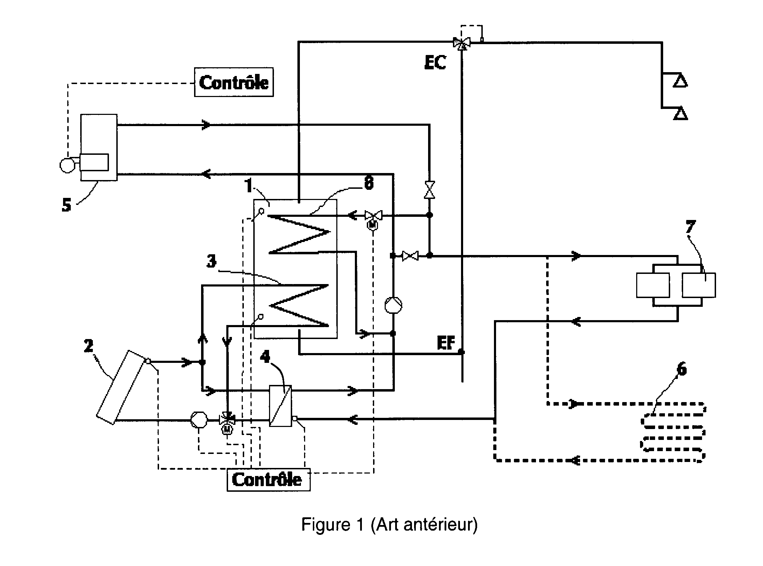

Actuellement, les installations combinées de chauffage et de production d'eau chaude sanitaire comportent au moins deux circuits indépendants de circulation de fluides. Comme représenté à la figure 1, la plupart des installations connues, comportent trois circuits indépendants de circulation de fluide :
- un premier fluide, constitué par de l'eau sanitaire, circule dans un récipient de stockage 1, entre une entrée d'eau froide EF et une sortie d'eau chaude EC,
- un second fluide, comportant de l'antigel, circule dans au moins un capteur solaire 2, dans un premier échangeur de chaleur 3 disposé dans le récipient de stockage 1 contenant de l'eau sanitaire et, éventuellement, dans le primaire d'un second échangeur de chaleur 4,
- un troisième fluide, ou fluide de chauffage, circule entre une chaudière, constituant un chauffage auxiliaire 5, et un plancher chauffant 6 et/ou des radiateurs de chauffage 7. Le troisième fluide peut également circuler dans le secondaire du second échangeur de chaleur 4 et dans un troisième échangeur de chaleur 8 disposé dans le récipient de stockage 1 contenant de l'eau sanitaire.

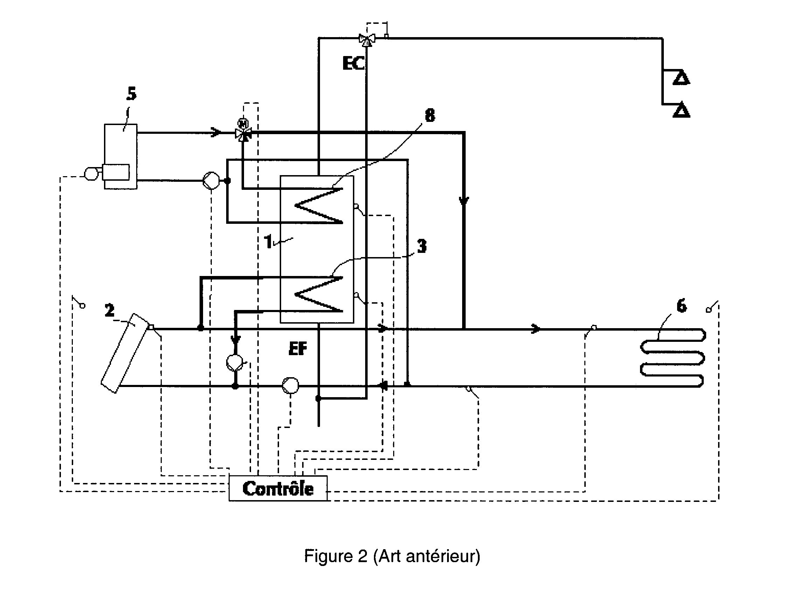

Il a également été proposé, notamment dans le document WO-A-03/010469, d'intégrer le chauffage solaire et le chauffage auxiliaire et de réduire à deux le nombre de circuits indépendants de circulation de fluides, le récipient de stockage 1 contenant toujours de l'eau sanitaire. Dans une autre installation de ce type, représentée à la figure 2, le même fluide, contenant de l'antigel, peut circuler dans les capteurs solaires 2, dans le chauffage auxiliaire 5, dans le plancher chauffant 6 et/ou les radiateurs de chauffage et dans deux échangeurs de chaleur 3 et 8 disposés dans le récipient de stockage.

Or, l'utilisation d'eau sanitaire comme fluide de stockage présente des risques. Cela peut notamment faciliter la propagation de certaines maladies, comme la légionellose.

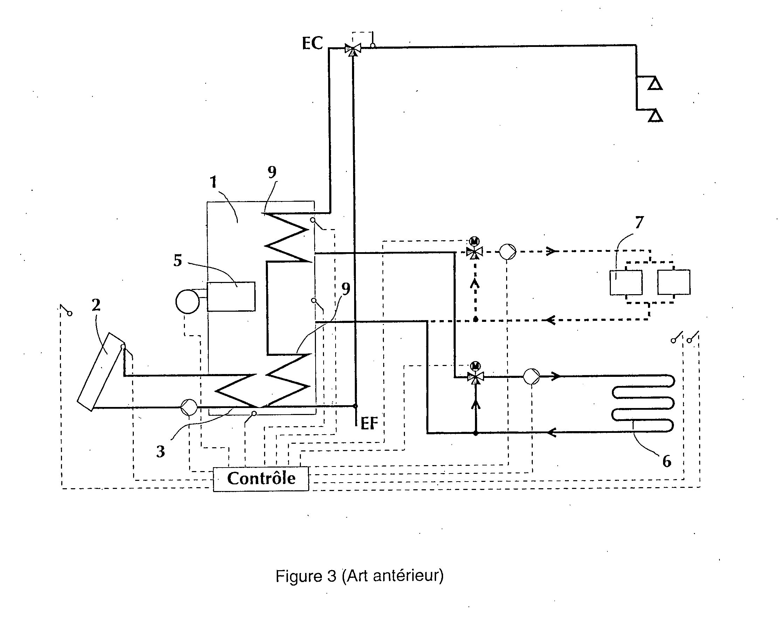

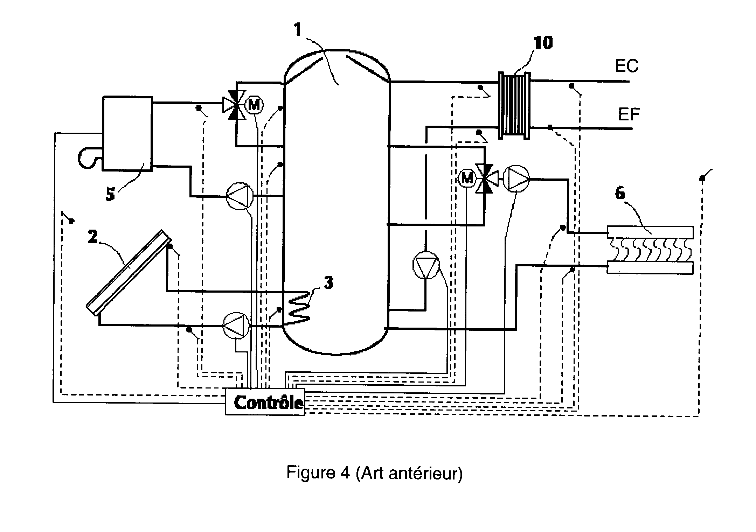

Pour écarter ces risques, dans certaines installations connues comportant trois circuits indépendants de circulation de fluide, le récipient de stockage 1, généralement de grande dimension (1000 à 15001), contient le fluide de chauffage circulant dans le chauffage auxiliaire 5, le plancher chauffant 6 et/ou les radiateurs de chauffage 7. Le chauffage auxiliaire 5 peut être intégré dans le récipient de stockage 1, comme représenté à la figure 3, ou disposé à l'extérieur, comme représenté à la figure 4. Comme sur la figure 1, un fluide contenant un antigel circule dans un circuit indépendant comportant les capteurs solaires 6 et un échangeur de chaleur 3 disposé dans le récipient de stockage 1. Comme représenté à la figure 3, l'eau sanitaire circule dans au moins un quatrième échangeur de chaleur 9, disposé dans le récipient de stockage 1, ou, comme représenté à la figure 4, dans le circuit secondaire d'un cinquième échangeur de chaleur 10, disposé à l'extérieur du récipient de chauffage et comportant un circuit primaire dans lequel circule de l'eau de chauffage en provenance du récipient de stockage 1.

### Objet de l'invention

L'invention a pour but de surmonter les inconvénients des installations connues et, plus particulièrement, d'améliorer le rendement d'une installation combinée de chauffage solaire et de production d'eau chaude sanitaire comportant un plancher chauffant.

Selon l'invention, ce but est atteint par une installation selon les revendications annexées et plus particulièrement par le fait que les capteurs solaires communiquent avec le récipient de stockage, de manière à ce que le fluide de stockage puisse circuler dans les capteurs solaires, les moyens auxiliaires de chauffage, le plancher chauffant et le circuit primaire de l'échangeur de chaleur.

Selon un développement de l'invention, le fluide de stockage comporte un antigel.

Selon un autre développement de l'invention, des circulateurs sont disposés dans des circuits de circulation de fluide de stockage disposés entre le récipient de stockage et, respectivement, les capteurs solaires, les moyens auxiliaires de chauffage, le plancher chauffant et l'échangeur de chaleur, le fonctionnement des circulateurs dépendant de températures mesurées en différents points de l'installation par des capteurs de température. Une platine est, de préférence, solidaire de la face avant du récipient de stockage et sert de support aux circulateurs et à au moins une partie des capteurs de température. Les moyens auxiliaires de chauffage sont solidaires de la face avant du récipient de stockage et peuvent constituer, avec la platine de support et le récipient de stockage, un ensemble prémonté destiné à être raccordé aux capteurs solaires et au plancher chauffant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 à 4 illustrent schématiquement quatre installations selon l'art antérieur.
La figure 5 illustre schématiquement un mode particulier de réalisation d'une installation selon l'invention.
Les figures 6 et 7 représentent, respectivement en perspective et en vue avant, un mode particulier de réalisation d'un récipient de stockage d'une installation selon l'invention.

### Description de modes particuliers de réalisation.

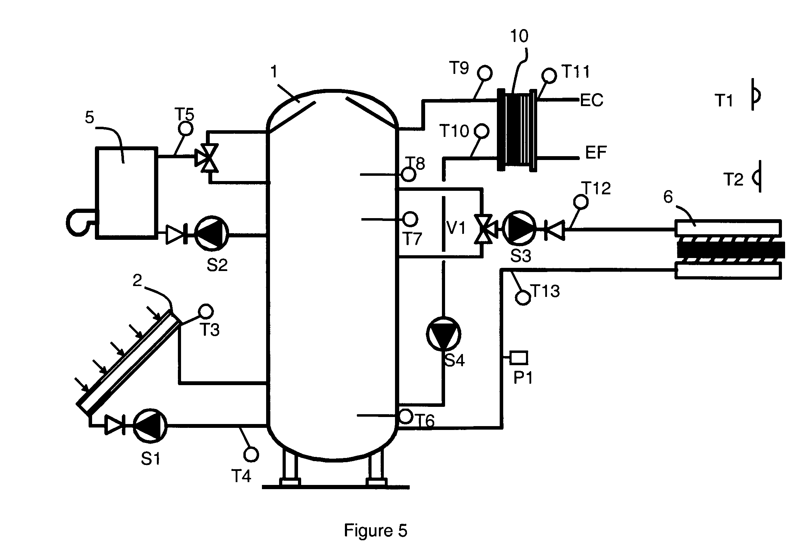

L'installation représentée à la figure 5 comporte, comme les installations connues, un récipient de stockage 1, au moins un capteur solaire 2, une chaudière constituant un chauffage auxiliaire 5, un plancher chauffant 6 et un échangeur de chaleur 10, disposé à l'extérieur du récipient de stockage. L'eau sanitaire circule dans le circuit secondaire de l'échangeur de chaleur 10, l'eau froide (EF) entrant dans l'échangeur de chaleur 10 étant chauffée pour fournir l'eau chaude sanitaire (EC). Un second circuit de chauffage, comportant un second plancher chauffant et/ou des radiateurs de chauffage, peut éventuellement être connecté au récipient de stockage 1.

L'entrée du circuit primaire de l'échangeur de chaleur 10 est connectée à l'extrémité supérieure du récipient de stockage 1, tandis que la sortie du circuit primaire de l'échangeur 10 ramène le fluide de stockage refroidi à l'extrémité inférieure du récipient de stockage.

Le chauffage auxiliaire 5 est connecté à la partie supérieure du récipient de stockage 1, de manière à être alimenté en fluide de stockage en provenance d'une zone située juste au-dessus de la partie centrale du récipient de stockage et à fournir le fluide de stockage réchauffé à l'extrémité supérieure du récipient de stockage.

Les capteurs solaires 2 sont connectés à la partie inférieure du récipient de stockage, de manière à être alimentés en fluide de stockage en provenance d'une zone située près de l'extrémité inférieure du récipient de stockage et à fournir le fluide de stockage réchauffé à l'extrémité inférieure du récipient de stockage.

Le plancher chauffant 6 est alimenté en fluide de stockage en provenance d'une zone située juste au-dessus de la partie centrale du récipient de stockage et à renvoyer le fluide de stockage refroidi à l'extrémité inférieure du récipient de stockage.

L'installation représentée à la figure 5 est quasiment monofluide, le fluide de stockage, ou fluide caloporteur, circulant dans tous les composants de l'installation à l'exception du circuit secondaire de l'échangeur de chaleur 10, dans lequel circule l'eau sanitaire. Dans cette installation, l'énergie est stockée en partie dans le récipient de stockage 1 et, en partie, dans le plancher chauffant 6. À titre d'exemple, le récipient de stockage peut être constitué par un ballon de 4001 environ, la capacité de stockage en fluide du plancher chauffant pouvant être de l'ordre de 2001. Le dimensionnement de l'installation prend en compte la capacité de stockage de la chaleur par un plancher chauffant en béton. À titre d'exemple, un plancher de 150 m² et de 10 cm d'épaisseur, correspondant à un volume de 15 m³, a une capacité de stockage d'énergie équivalente à celle de 7 m³ d'eau. Ceci permet donc de réduire le volume du récipient de stockage 1, dont la capacité doit simplement être suffisante pour permettre le chauffage de l'eau sanitaire, et, en conséquence, de réduire le volume du fluide de stockage. La capacité du récipient de stockage 1 doit néanmoins être plus importante, par exemple de l'ordre de 1000l, si l'installation comporte également des radiateurs de chauffage.

La suppression d'au moins un échangeur de chaleur par rapport aux installations connues permet d'améliorer le rendement de l'installation. Le fluide de stockage comporte de préférence un antigel. À titre d'exemple, le fluide de stockage peut être constitué par un mélange, suffisamment liquide pour circuler sans difficulté à l'intérieur de l'installation, comportant environ 57% d'eau et 43% d'antigel. En pratique, la teneur en antigel peut généralement être réduite à environ 20% pour une protection jusqu'à -7°C. Par ailleurs, l'antigel peut être totalement supprimé si l'installation est destinée à être utilisée dans une zone ne craignant pas le gel.

Un circuit de commande, non représenté, contrôle l'actionnement de circulateurs, par exemple constitués par des pompes, disposés en différents emplacements de l'installation, en tenant compte des températures fournies par des capteurs de température et/ou de pression disposés à des emplacements prédéterminés de l'installation.

Dans le mode de réalisation particulier représenté à la figure 5, un circulateur S1, à vitesse variable, est disposé entre le récipient de stockage 1 et les capteurs solaires 2, en amont de ceux-ci. Un circulateur S2 est disposé entre le récipient de stockage 1 et le chauffage auxiliaire 5, en amont de celui-ci. Un circulateur S3 est disposé entre le récipient de stockage 1 et le plancher chauffant 6, en amont de celui-ci, de préférence en aval d'une vanne de distribution V1 connectée à deux sorties distinctes du récipient de stockage, disposées respectivement dans la partie centrale du récipient et dans une zone médiane de la partie supérieure du récipient. Un circulateur S4 est disposé dans le circuit primaire de l'échangeur de chaleur 10, à la sortie de celui-ci. Des capteurs de température T1 et T2 sont destinés à fournir des mesures représentatives de la température ambiante, respectivement à l'extérieur et à l'intérieur de l'appartement ou de la maison à chauffer. Des capteurs de température T3 et T4 sont respectivement disposés à la sortie des capteurs solaires 2 et à la sortie du récipient de stockage 1, en amont du circulateur S1. Un capteur de température T5 est disposé à la sortie du chauffage auxiliaire 5. Des capteurs de température T6, T7 et T8, destinés à mesurer la température dans diverses zones du récipient de stockage 2, sont respectivement disposés
- dans la partie inférieure du récipient de stockage, à proximité des entrées des circuits en provenance de l'échangeur de chaleur 10 et du plancher chauffant 6 (capteur T6),
- entre les deux sorties du récipient connectées à la vanne de distribution V1 (capteur T7),
- dans la partie supérieure du récipient, au-dessus des sorties connectées à la vanne de distribution V1 (capteur T8).

Des capteurs de température T9 et T10 sont respectivement disposés en amont et en aval de l'échangeur de chaleur, dans le circuit primaire de celui-ci. Un capteur de température T11 est disposé à la sortie d'eau chaude de l'échangeur de chaleur 10. Des capteurs de température T12 et T13 mesurent respectivement la température en amont et en aval du plancher chauffant 6. Un capteur de pression P1 est disposé en aval du plancher chauffant 6. Chaque circulateur est, de préférence, muni d'un clapet anti-retour pour éviter des phénomènes de thermo-siphon.

L'installation représentée à la figure 5 fonctionne, de préférence, de la manière décrite ci-dessous.

La vitesse du circulateur S1 est contrôlée automatiquement, de manière à maintenir un écart sensiblement constant (par exemple 2°C) entre les températures ϑ3 et ϑ4 respectivement mesurées par les capteurs de température T3 et T4. Ainsi, lorsque les capteurs solaires fournissent peu d'énergie, par exemple en début de matinée ou en fin de journée, la vitesse du circulateur S1 est réduite et la quantité d'énergie transférée au récipient de stockage est adaptée en conséquence.

Par ailleurs, dans un mode de réalisation préférentiel, le circulateur S1 est arrêté dès que la température ϑ8 mesurée par le capteur de température T8 dépasse une valeur de consigne T8cons prédéterminée, typiquement comprise entre 70°C et 80°C, jusqu'à ce que la température ϑ3 atteigne une valeur limite T3lim, typiquement comprise entre 130°C et 140°C, et/ou que la pression mesurée par le capteur de pression P1 atteigne une valeur limite P1lim, typiquement de l'ordre de 3 bars. Dès qu'une des valeurs limites T3lim ou P1lim est atteinte, le circulateur S1 est remis en service, à une vitesse réduite, de l'ordre de 10% de sa vitesse nominale, jusqu'à ce que les valeurs mesurées redescendent respectivement au-dessous de T3lim-ΔT3lim ou de P1lim-ΔP1lim. Il est ainsi possible de limiter les températures excessives dans le récipient de stockage 1, en limitant, par le contrôle du débit du circulateur S1, la quantité d'énergie injectée dans le récipient de stockage par les capteurs solaires 2. Simultanément, la limitation de la vitesse du circulateur S1 lorsque la température ϑ8 du fluide de stockage dépasse la valeur de consigne T8cons permet de faire fonctionner les capteurs solaires 2 à une température élevée, proche de T3lim, ce qui réduit leur rendement et limite automatiquement la quantité d'énergie injectée dans le récipient de stockage 1 par les capteurs solaires. Dans une variante de réalisation, le circulateur S1 est redémarré, pour un cycle de marche de durée prédéterminée, lorsque la température limite T3lim est atteinte. Il est ainsi alternativement soumis à un cycle de marche de durée prédéterminée, à vitesse nominale, lorsque la limite T3lim est atteinte, puis à un cycle d'arrêt jusqu'à ce que cette limite soit de nouveau atteinte.

Le fonctionnement du chauffage auxiliaire 5 et du circulateur S2 est, de manière classique, contrôlé en fonction de la température du fluide de stockage dans la partie supérieure, la plus chaude, du récipient de stockage 1, plus particulièrement en fonction des températures mesurées par les capteurs de température T7 et T8, de manière à maintenir le fluide de stockage à une température de consigne prédéterminée dans cette partie, de l'ordre de 50°C par exemple pour T8.

Le circulateur S3, à vitesse variable, permet de contrôler le débit du fluide de stockage envoyé dans le plancher chauffant 6, notamment en fonction des températures mesurées par les capteurs de température T1, T2, T12 et T13, de manière à réguler la température fournie par le capteur T12, à l'entrée du plancher chauffant. Lorsque la température extérieure est basse, toute l'énergie des capteurs solaires est, de préférence, transmise par le circulateur S3 dans le plancher chauffant 6. Par contre, lorsque la température extérieure est élevée, la température ϑ8 du fluide de stockage peut être trop élevée et, s'il existe une différence entre les températures mesurées par les capteurs T12 et T13, le débit du circulateur S3 peut alors être contrôlé en fonction de la température mesurée par le capteur de température T13, à la sortie du plancher chauffant 6.

Le fonctionnement du circulateur S4 est, de manière classique, contrôlé en fonction des signaux fournis par un détecteur de débit proportionnel (non représenté), disposé dans l'entrée d'eau froide (EF) en amont du circuit secondaire de l'échangeur de chaleur 10, et de la température mesurée par le capteur de température T9. La vitesse de rotation du circulateur S4 et, en conséquence, le débit du fluide de stockage dans le circuit primaire de l'échangeur de chaleur 10, entre les extrémités supérieure, chaude, et inférieure, plus froide, du récipient 1 peuvent être corrigés en fonction de la température de l'eau chaude sanitaire (EC) mesurée par le capteur de température T11.

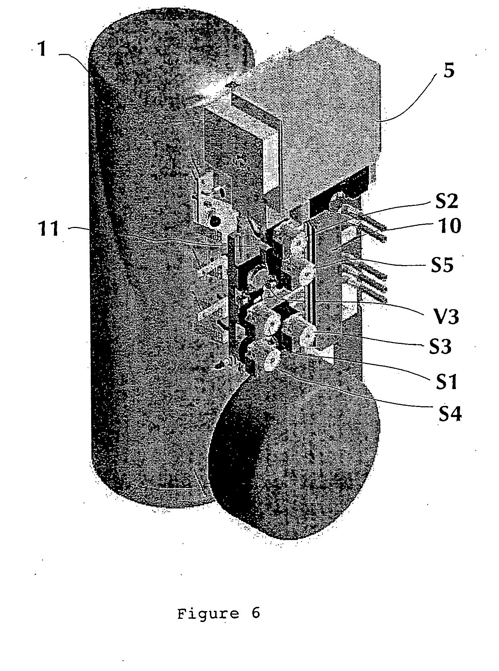

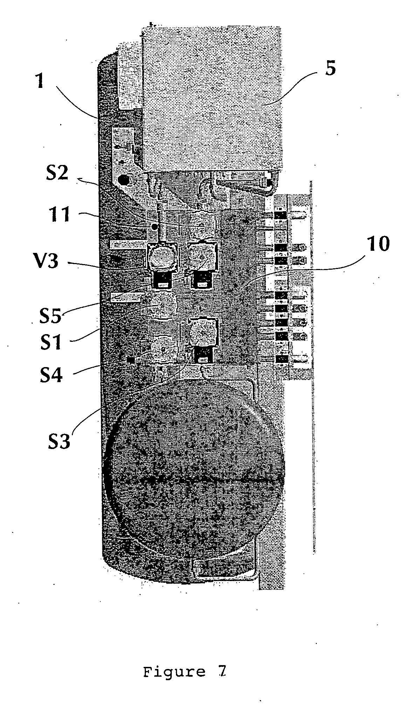

Dans le mode de réalisation particulier illustré aux figures 6 et 7, une platine 11, de préférence en matière plastique est solidarisée avec la face avant du récipient de stockage 1. L'échangeur de chaleur 10 et l'ensemble des circulateurs, des vannes et des capteurs de température (à l'exception des capteurs de température T1, T2 et T3) et de pression sont regroupés sur la platine 11. Le chauffage auxiliaire 5 est également monté sur le récipient. L'ensemble peut ainsi être prémonté en usine et l'installateur n'a plus qu'à effectuer les raccordements aux capteurs solaires 2 et au plancher chauffant 6, ce qui réduit le coût de l'installation. La disposition de la platine 1 en face avant du récipient de stockage 1 permet un accès facile de tous les composants. Le circulateur S5 et la vanne V3 additionnels illustrés aux figures 6 et 7 sont destinés à être disposés dans un second circuit de chauffage (non représenté), de manière analogue au circulateur S3 et à la vanne V1 du circuit de chauffage constitué par le plancher chauffant 6.

## Revendications

1. Installation combinée de chauffage solaire et de production d'eau chaude sanitaire, comportant au moins un capteur solaire (2), un récipient (1) de stockage d'un fluide de stockage, communiquant avec des moyens auxiliaires de chauffage (5) du fluide de stockage, avec un plancher chauffant (6) et avec le circuit primaire d'un échangeur de chaleur (10) ayant un circuit secondaire dans lequel circule de l'eau sanitaire à chauffer, installation **caractérisée en ce que** les capteurs solaires (2) communiquent avec le récipient (1) de stockage, de manière à ce que le fluide de stockage puisse circuler dans les capteurs solaires (2), les moyens auxiliaires de chauffage (5), le plancher chauffant (6) et le circuit primaire de l'échangeur de chaleur (10).

2. Installation selon la revendication 1, **caractérisée en ce que** le fluide de stockage comporte un antigel.

3. Installation selon la revendication 2, **caractérisée en ce que** le fluide de stockage est constitué par un mélange comportant environ 57% d'eau et 43% d'antigel.

4. Installation selon la revendication 2, **caractérisée en ce que** le fluide de stockage comporte environ 20% d'antigel.

5. Installation selon l'une quelconque des revendications 1 à 4, **caractérisée en ce que** la capacité du récipient (1) de stockage est limitée, une partie de l'énergie stockée par le fluide de stockage étant stockée dans le plancher chauffant (6).

6. Installation selon l'une quelconque des revendications 1 à 5, **caractérisée en ce qu'**elle comporte des circulateurs (S1, S2, S3, S4) disposés dans des circuits de circulation du fluide de stockage disposés entre le récipient (1) de stockage et, respectivement, les capteurs solaires (2), les moyens auxiliaires de chauffage (5), le plancher chauffant (6) et l'échangeur de chaleur (10), le fonctionnement des circulateurs dépendant de températures mesurées en différents points de l'installation par des capteurs de température (T1-T13).

7. Installation selon la revendication 6, **caractérisée en ce qu'**elle comporte une platine (11) solidaire de la face avant du récipient (1) de stockage et servant de support aux circulateurs (S1, S2, S3, S4) et à au moins une partie des capteurs de température.

8. Installation selon la revendication 7, **caractérisée en ce que** les moyens auxiliaires de chauffage (5) sont solidaires de la face avant du récipient (1) de stockage et constituent, avec la platine de support (11) et le récipient de stockage, un ensemble prémonté destiné à être raccordé aux capteurs solaires (2) et au plancher chauffant (6).
